# EUROPEAN PATENT APPLICATION

(11) **EP 1 770 549 A2**
(43) Date of publication of application: **04.04.2007**
(21) Application number: 06255029.8
(22) Date of filing: 28.09.2006
(51) Int. Cl.: G06F 17/24

(54) **Contents editor and method of editing contents using the same**

(30) Priority: 29.09.2005 JP 2005284877
(71) Applicant: SEIKO EPSON CORPORATION, Shinjuku-ku Tokyo 163-0811 (JP)
(72) Inventor: Matsuo, Hiroshi c/o Seiko Epson Corporation, Suwa-shi, Nagano 392-8502 (JP); Araki, Mieko, Sapporo-shi, Hokkaido 003-0021 (JP)
(74) Representative: Kenyon, Sarah Elizabeth

(57) **Abstract**

In a method of editing contents of a plurality of items on a single display, it is drawn, on the display, a first image including a plurality of input sections each of which is associated with one of the items and includes a text box. When one of the items is selected, a input user interface associated with the selected one of the items and including a text box is provided, such that an appearance thereof is identical with one of the input sections corresponding to the selected one of the items. The input user interface is displayed in such a state that the input user interface is superposed on the one of the input sections. Editorial information of the selected one of the items is input to the text box of the input user interface.

## Description

The present invention relates to a contents editor and a method of editing contents using the same.

In general, an apparatus for editing characters while displaying an image, such as a cellular phone, provides a standard character input UI (user interface) by functions determined by its specifications (for example, text control). In the specifications of a certain type of apparatus, the input UI is activated by an instruction to start editing characters in connection with a specific item. Characters are input in the input UI, and the content thereof is settled. Such a technique is disclosed in, for example, Japanese Patent Publication No. 2003-122746A.

According to the technique disclosed in this publication, when a user inputs content (e.g., text of a mail) with respect to one certain item, an input UI for inputting the content is provided on a display without showing the name of the item. Thus, in a case where the user has to input contents with respect to a plurality of items, when the input UI is provided after one of the items is designated, the user sometimes be uncertain about characters to be input with respect to the designated item. In such a situation, the user has to return to the previous screen (i.e., item designating screen) in order to confirm the item that the user has to input characters currently. It is very inconvenient for the user. This problem is unavoidable in an apparatus in which only one input UI can be displayed on a single screen.

It is therefore an object of the invention to provide a technique for easily performing editing contents of a plurality of items.

In order to achieve the above object, according to the invention, there is provided a method of editing contents of a plurality of items on a single display, comprising:
drawing, on the display, a first image containing a plurality of input sections each of which is associated with one of the items and including a text box;
selecting first one of the items;
providing a first input user interface associated with the first one of the items and including a text box, such that an appearance thereof is identical with first one of the input sections corresponding to the first one of the items;
displaying the first input user interface in such a state that the first input user interface is superposed on the first one of the input sections; and
inputting first editorial information of the first one of the items to the text box of the first input user interface.

With this configuration, it is possible to keep the input section of another item displayed in another portion of the same screen while displaying the input user interface of the item to be edited.

The method may further comprise:
selecting second one of the items;
drawing, on the display, a second image containing an input section associated with the first one of the items and including a text box in which the first editorial information is inputted;
providing a second input user interface associated with the second one of the items and including a text box, such that an appearance thereof is identical with second one of the input sections corresponding to the second one of the items;
displaying the second input user interface in such a state that the second input user interface is superposed on the second one of the input sections; and
inputting second editorial information of the second one of the items to the text box of the second input user interface.

Therefore, when editorial information is input to any one of the items, it is possible to execute the input operation while viewing another item. In addition, even when only one input user interface capable of displaying one screen is provided according to the specifications of an apparatus, it is possible to perform the input operation while viewing a plurality of items at the same time. As a result, it is possible to edit contents of the items easier, without feeling uncertainness.

The editorial information may receive in response to the operation of a user, and corresponds to various input devices, such as a vibration detecting device, and a button or a dial of a cellular phone. Various types of display devices such as a liquid crystal display device and an organic EL display device, can be used as the display.

Further, since the input user interface having an identical appearance with the input section corresponding to the selected item is superposed on the input section and displayed, it is possible to start input without changing the screen. Therefore, even when only one input user interface can be displayed on one screen, it is possible to perform input with respect to a plurality of items without changing the screen.

The item input sections may be arranged side by side on the screen, and the item to be edited may be changed in response to the operation of a button. In this case, it is possible to provide a user interface that sequentially changes editing objects displayed on one screen in response to the operation of a button to perform input a desired editing object, and thus it is possible to easily perform input to a plurality of items. Of course, when items are too many to be displayed on one screen, the display of an editorial screen display may be controlled such that the screen is scrolled in response to the operation of a button. Further, it is preferable to display the item input sections of items other than the editing object and the input user interface at the same time and to perform the reception of the editorial information by the input user interface. For example, it is preferable to use a text control function of the editing device.

The name of each of the items may be obtained from layout data indicative of how to arrange the contents when the contents are output. With this configuration, even when editing is performed on any kind of layout, it is possible to provide an editorial screen appropriate to the layout of interest, and thus to easily edit the contents of items.

The method may further comprise:
selecting third one of the items;
drawing, on the display, a third image containing an input section associated with the second one of the items and including a text box in which the second editorial information is inputted;
judging whether the third one of the items is identical with the first one of the items; and
providing the first input user interface in such a state that the first editorial information is inputted in the text box thereof, when it is judged that the third one of the items is identical with the first one of the items.

The method may further comprise:
selecting second one of the items which is not displayed in the display;
drawing, on the display, a second image containing an input section associated with the second one of the items and including a text box;
providing a second input user interface associated with the second one of the items and including a text box, such that an appearance thereof is identical with second one of the input sections corresponding to the second one of the items;
displaying the second input user interface in such a state that the second input user interface is superposed on the second one of the input sections; and
inputting second editorial information of the second one of the items to the text box of the second input user interface.

According to the invention, there is also provided a program product comprising a computer-readable medium having recorded a program operable to cause a computer to execute the above method.

According to the invention, there is also provided a device for editing contents of a plurality of items, comprising:
a display;
an image processor, operable to draw, on the display, an image including a plurality of input sections each of which includes a name of one of the items and a text box;
a selector, operable to select one of the items; and
an editorial controller, operable to:
   provide an input user interface including a name of the selected one of the items and a text box, such that an appearance thereof is identical with one of the input sections corresponding to the selected one of the items;
   display the input user interface in such a state that the input user interface is superposed on the one of the input sections corresponding to the selected one of the items; and
   input editorial information of the selected one of the items to the text box of the input user interface.

The above objects and advantages of the present invention will become more apparent by describing in detail preferred exemplary embodiments thereof with reference to the accompanying drawings, wherein:
Fig. 1 is a block diagram showing hardware and software configurations of a cellular phone according to one embodiment of the invention;
Fig. 2 is a flowchart showing an editorial processing executed by the cellular phone;
Figs. 3A to 3C are diagrams showing examples of screens displayed on a display of the cellular phone when editing is performed in the cellular phone; and
Figs. 4A and 4B are diagrams showing examples of screens displayed on the display of the cellular phone, according to a modified example of the editorial processing of Fig. 2.

Embodiments of the invention will be described below in detail with reference to the accompanying drawings.

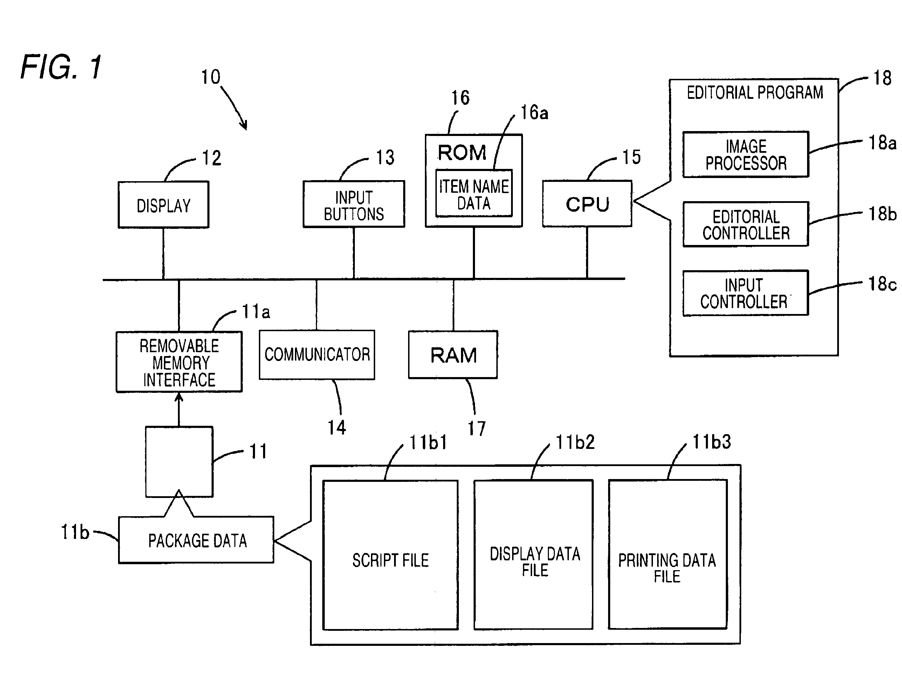

A cellular phone according to one embodiment of the invention is capable of performing various functions, such as talking, data communication and data editing. As shown in Fig. 1, the cellular phone 10 includes a removable memory interface 11a, a display 12, input buttons 13, a communicator 14, a CPU 15, a ROM 16, and a RAM 17. The CPU 15 is connected to the components through a bus, and performs a predetermined program in cooperation with the ROM 16 and the RAM 17.

The display 12 is capable of displaying, for example, various images or a UI under the control of the CPU 15. The CPU 15 can acquire various input information items when at least one of the input buttons 13 are operated. The communicator 14 performs wireless communication with a base station (not shown) under the control of the CPU 15 to provide a call service and a data communication service.

A removable memory 11 is detachably provided in the removable memory interface 11 a. The CPU 15 can store data in the removable memory 11 or read out data from the removable memory 11. In this embodiment, package data 11 b composed of a packet of data for forming a layout at the time of printing is stored in the removable memory 11.

The package data 11 b includes a script file 11b1, a display data file 11 b2, and a printing data file 11 b3. Text data indicating the layout is described in the script file 11 b1. The text data indicating the layout may include a plurality of parameters for specifying the layout at the time of printing, and can adopt various data formats. In this embodiment, the parameters include: the type of printing sheet such as the size of a sheet (e.g., A4, L size, post card) and the quality of a printing sheet (e.g., coated paper, uncoated paper); the position of a text box; the size of a text box; the maximum number of characters capable of being included in a text box (the number of characters in a text box); the size of a character; and attributes of a text box. Data indicating characters which have been input into each text box may be described.

The attributes of a text box indicate the content of characters to be input to each text box, and has a one-to-one correspondence to an item name of each text box. For example, the item name of a text box to which a zip code will be input is a "zip code", and the attribute of the text box is information indicating that the text box is for the "zip code". In this embodiment, it is possible to easily perform display with a plurality of languages by associating the text box with the attribute and converting the attribute to the item name on the basis of item name data 16a stored in the ROM 16. That is, in a stage in which the package data is created, an attribute that has a common definition to various languages is associated with the text box, and in the actual display, the attribute is converted into an item name corresponding to the language of a user on the basis of the item name data 16a corresponding to each language in the cellular phone 10. When correspondence for every language is not needed, the item name may associate with the text box.

The printing data file 11 b3 is data indicating an image to be printed, and the display data file 11 b2 is thumbnail data for displaying the image on a screen. Therefore, when a computer or a printer (not shown) acquires the package data 11 b and analyzes the acquired package data, it is possible to obtain the printing result obtained by laying out characters and the image indicated by the printing data file 11 b3 according to the layout described in the script file 11b1.

In this embodiment, a plurality of characters arranged on the layout are uses as printing objects, a plurality of item names converted from the attributes are displayed on the display 12 for editing, and one of the item name is edited. This editorial processing is sequentially performed on the other item names. In the cellular phone 10 shown in Fig. 1, in order to perform the editorial processing, an editorial program 18 is included in various programs capable of being executed by the CPU 15. The editorial program 18 includes an image processor 18a, an editorial controller 18b, and an input controller 18c. The image processor 18a is a module for processing images, and displays an image on the display 12 on the basis of the package data 11 b. The editorial controller 18b analyzes layout data included in the package data 11 b to acquire item names, and receives input content corresponding to each item. The input controller 18c acquires data indicating the operation executed by the input buttons 13.

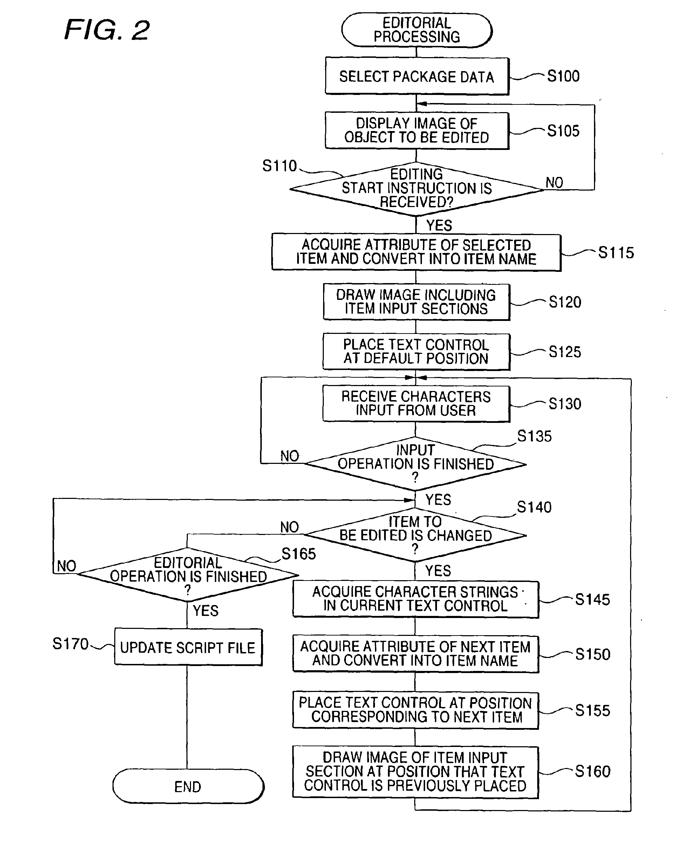

The editorial program 18 having the above-mentioned configuration allows an image to be displayed, on the basis of the package data 11b, and performs a processing for editing each item. The user of the cellular phone 10 operates the input buttons 13 of the cellular phone 10 to execute the editorial program 18. When the editorial program 18 is executed, as shown in Fig. 2, the user operates the input buttons 13 to select the package data 11 b (step S100).

That is, the image processor 18a accesses the removable memory 11 to acquire a plurality of package data 11b stored in the removable memory 11, and controls the display 12 to provide alternatives such that the user can select any one of the plurality of package data. The user uses the input buttons 13 to designate a desired one of the plurality of package data 11b. When the input controller 18c acquires the content designated by the-user, the selection of the package data 11b is definitely settled. The layout of the selected package data 11b will be edited. The image processor 18a extracts data indicating an image to be displayed from the display data file 11b2 of the selected package data 11b, and displays an image on the display 12 on the basis of the data (step S105).

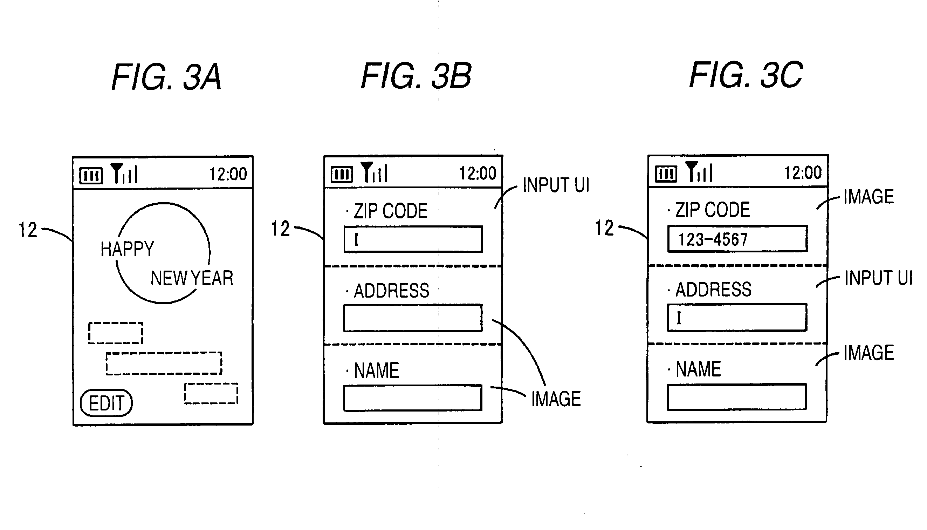

Fig. 3A shows an example of the image displayed in step S105. More specifically, Fig. 3A shows an image of characters "Happy New Year" overlapping the background of a sunrise image, and an "edit" button for receiving an item editing start instruction is displayed at the lower left side of the screen. Since the content of the item is unsettled before the item is edited, no characters are displayed in the text boxes represented by dashed lines in Fig. 3A.

For the purpose of easy understanding, the text boxes are represented by dashed lines in Fig. 3A. However, in the actual display screen, the text boxes are not represented by dashed lines. The "edit" button displayed at lower left side in Fig. 3A corresponds to any one of the input buttons of the input buttons 13, and the input controller 18c determines whether the editing start instruction is received through the "edit" button (step S110). That is, the input controller 18c determines whether one of the input buttons of the input buttons 13 corresponding to the "edit" button in the screen displayed in Fig. 3A is operated.

When it is determined in step S110 that the editing start instruction is received, the screen is changed to the editorial screen shown in Fig. 3B to start editing. Therefore, first, the editorial controller 18b analyzes the script file 11 b1 to acquire the attribute of each text box, and converts the attribute into an item name (step S115). In this embodiment, as described above, since the attribute and the item name are associated with each other by the item name data 16a, the editorial controller 18b converts the attribute of each text box into an item name on the basis of the item name data 16a.

Since the above-mentioned processing enables the item name of the text box to be acquired, the image processor 18a forms an image displaying each item name and the character input box corresponding to the item name, and displays the editorial screens as shown in Figs. 3B and 3C on the display 12 (step S120). At that time, when content which has been input exists in connection with a certain item, the image processor 18a reads out the input content of the item from the script file 11b1 and draws a character string in the associated input box. A plurality of item input sections, each composed of the item name and the input box, are displayed on a single screen. When the item input sections corresponding to the entire screen are drawn, it is possible to easily return to the screen before interruption even when the cellular phone 10 receives a phone call and the editorial processing shown in Fig. 2 is interrupted.

Since the image processor 18a draws the item input sections as a bitmap image, the image including the item input section cannot receive a user's input. Thus, in this embodiment, an input UI of each item is displayed by a standard text control function (for example, ITEXTCTL in BREW which is a registered trademark of Qualcomm Incorporated) provided in the cellular phone 10, and a text control is set to the item located at a default position (step S125). That is, the editorial controller 18b acquires the item name of the item at the default position to generate an input UI in which both the item name and the input box thereof are written, and displays the input UI at the default position. At that time, the editorial controller 18b analyzes the script file 11b1 to acquire the number of characters of the item and makes a UI capable of inputting characters using the number of characters as the maximum number. When input content previously input to the item exists, the editorial controller 18b reads out the character string from the script file 11b1 and displays the character string in the input box.

The image processor 18a draws the item input section such that the appearance of the item input section is the same as that of the input UI. Of course, in the same UI, the appearance of the item name is the same as that of the input box, but the input contents in the input boxes are not necessarily identical to each other. For example, as described above, when the input content has already existed, the input content is displayed in the input box. Then, when text is input after step S130, the input text is displayed in the input box. Therefore, content can be arbitrarily displayed in the input box.

In Fig. 3B, the item name "zip code" and the input box therefor are provided as an input UI, and a caret is displayed in the input box. Meanwhile, item input sections composed of item names "address" and "name" and input boxes therefor are drawn as the bitmap image. In Fig. 3B, characters cannot be input to these item input sections. In order to input characters to the input UI, the text control function must be used. In this case, the editorial controller 18b receives the input characters (step S130). That is, the input controller 18c receives signals input through the input buttons 13, and the editorial controller 18b acquires the content of the input signals and sequentially displays characters in the input box of the input UI. When an input finish instruction is input through the input buttons 13, the editorial controller 18b determines whether the input controller 18c receives the input finish instruction (step S135).

In step S135, when it is determined that the input finish instruction is received, the editorial controller 18b associates the input character string with the item name by the text control function and stores the association in the RAM 17. Further, it is determined whether an editing-item changing instruction is received (step S140). For example, a button (not shown) of the input buttons 13 may be operated to move the input UI upward or downward, thereby changing an item to be edited.

In step S140, when it is determined that the editing-item changing instruction is received, a processing of changing the position of the input UI is performed. In order for this process, first, the editorial controller 18b acquires the character string input by the text control function performed in the previous editing stage from the RAM 17 (step S145). Then, in order to construct the input UI after editing, the editorial controller 18b analyzes the script file 11b1 to acquire the attribute of the next text box and converts the attribute into an item name (step S150). For example, in Fig. 3B, when an item below the item "zip code" is edited, the editorial controller 18b acquires the attribute of the item below the item "zip code" and converts the attribute into an item name, thereby acquiring a character string "address". Any method of acquiring an item name may be used. Therefore, the item name acquired in step S115 may be used.

The editorial controller 18b places a text control for an item to be edited at a position where the item input section of the item to be edited is displayed (step S155). That is, the editorial controller 18b generates an input UI in which both the item name acquired in step S150 and the input box thereof are written, and displays the input UI so as to overlap the item input section of the item to be edited. At that time, the editorial controller 18b analyzes the script file 11b1 to acquire the number of characters of the item to be edited, and makes a UI capable of inputting characters using the number of characters as the maximum value. When input content previously input to the item exists, the editorial controller 18b reads out the character string from the RAM 17 and displays the character string in the input box.

The image processor 18a draws the item input section, and displays it at the original text control position (a potion where the input UI of the item "zip code" is displayed in Fig. 3B)(step S160). In this case, the image processor 18a forms an image, with the input character string being displayed in the input box. That is, the editorial controller 18b acquires from the RAM 17 the character string input before the editing-item changing instruction is issued in step S145, and forms an image of the input box having the character string displayed therein and an image of the input box having the item name of the item written therein.

As the result of the processing, the position of the input UI is changed in response to the editing-item changing instruction, and the input content of the original item is displayed. Therefore, even in the cellular phone 10 capable of displaying only one input UI on one screen, it is possible to provide such an input UI as if a plurality of items are freely changed and the contents thereof are input. For example, when the input of the item "zip code" is finished and then the editing item changes to the item "address", to edit the item "address", the input Ul for the item "zip code" is changed to an input Ul for the item "address", with numbers (for example, 123-4567) indicating the zip code being displayed in the item "zip code", as shown in Figs. 3B and 3C.

After the above-mentioned processes, processes after step S130 are repetitively performed on the changed item to be edited, thereby editing the content of a plurality of items. Therefore, in a case where the content of a plurality of item are edited, when an item to be edited is input, it is possible to continue to display items other than the item to be edited, and it is also possible to input content to the item to be edited while viewing the content of the items other than the item to be edited. As a result, it is possible to simply perform input to a plurality of items, without feeling uncertainness.

In step S140, when it is determined that the editing-item changing instruction is not received, the editorial controller 18b determines whether an editing finish instruction is issued (step S165). For example, one of the input buttons 13 may be operated to issue the editing finish instruction, and the editorial controller 18b receives the instruction. When it is determined that the editing finish instruction is issued in step S165, the editorial controller 18b updates the script file 11b1 on the basis of the input content (step S170). That is, the editorial controller 18b acquires the character string input in each item with reference to the RAM 17 and describes text data indicating the input content in the script file 11b1, thereby updating the script file 11b1. After the above-mentioned processings, printing is performed on the basis of the package data 11b to obtain a print where the edited character string is laid out.

In this embodiment, three items are displayed on the display 12 such that they can be edited. However, four or more items may be displayed on the display 12 such that they can be edited. In this case, for example, three items may be displayed on one screen and the screen may be scrolled when items other than the displayed items are edited.

More specifically, in the flowchart that is the same as that shown in Fig. 2, after data is input to the lowest or uppermost input box, items not displayed on the screen may be designated as editing objects in step S140. When the items not displayed on the screen are designated, the text control of the designated items is set without changing the position of the text control in step S155. In step S160, the image of the item input section is drawn at a position after the scroll of one item.

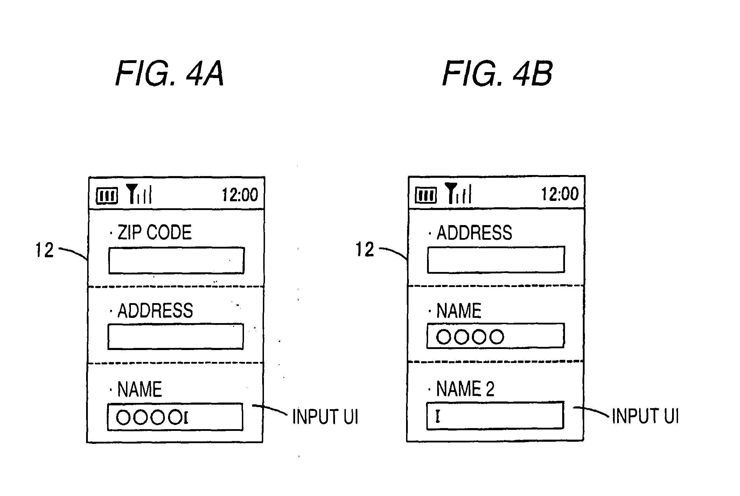

It is assumed that an item "name 2" in addition to the items "zip code", "address", and "name" is displayed such that it can be edited in Figs. 3A to 3C. In this case, in Fig. 4A, when the input of the item "name" is completed and an instruction is issued to change an editing object item to the item "name 2", the character string of the item "name" is acquired in step S145 and the item name of the item "name 2" is acquired in step S150. In step S155, as shown in Fig. 4B, a text control for inputting the item "name 2" to the lowest stage is placed, and the item "address" and the item "name" having input content described therein are displayed at the uppermost stage and the intermediate stage in step S160, respectively. The above-mentioned processes make it possible to provide a UI for performing scroll to edit items even when a text control capable of being displayed on the screen is only one.

In this embodiment, the information related to the printing layout is edited. However, information to be edited is not limited thereto.

In this embodiment, the cellular phone serves as the editor. However, any apparatus having a display capable of displaying only one input UI on one screen may be serve as the editor. For instance, the invention can be applied to a digital camera, a PDA or the like having such a display.

Although the present invention has been shown and described with reference to specific preferred embodiments, various changes and modifications will be apparent to those skilled in the art from the teachings herein. Such changes and modifications as are obvious are deemed to come within the scope of the invention as defined in the appended claims.

## Claims

1. A method of editing contents of a plurality of items on a single display, comprising:
drawing, on the display, a first image containing a plurality of input sections each of which is associated with one of the items and includes a text box;
selecting first one of the items;
providing a first input user interface associated with the first one of the items and including a text box, such that an appearance thereof is identical with first one of the input sections corresponding to the first one of the items;
displaying the first input user interface in such a state that the first input user interface is superposed on the first one of the input sections; and
inputting first editorial information of the first one of the items to the text box of the first input user interface.

2. The method as set forth in claim 1, further comprising:
selecting second one of the items;
drawing, on the display, a second image containing an input section associated with the first one of the items and including a text box in which the first editorial information is inputted;
providing a second input user interface associated with the second one of the items and including a text box, such that an appearance thereof is identical with second one of the input sections corresponding to the second one of the items;
displaying the second input user interface in such a state that the second input user interface is superposed on the second one of the input sections; and
inputting second editorial information of the second one of the items to the text box of the second input user interface.

3. The method as set forth in claim 1, wherein:
the first input user interface is provided by a text control function of an editing device in which the method is executed.

4. The method as set forth in claim 1, wherein:
the name of each of the items is obtained from layout data indicative of how to arrange the contents when the contents are output.

5. The method as set forth in claim 1, wherein:
the first image is a bit map image.

6. The method as set forth in claim 2, further comprising:
selecting third one of the items;
drawing, on the display, a third image containing an input section associated with the second one of the items and including a text box in which the second editorial information is inputted;
judging whether the third one of the items is identical with the first one of the items; and
providing the first input user interface in such a state that the first editorial information is inputted in the text box thereof, when it is judged that the third one of the items is identical with the first one of the items.

7. The method as set forth in claim 1, further comprising:
selecting second one of the items which is not displayed in the display;
drawing, on the display, a second image containing an input section associated with the second one of the items and including a text box;
providing a second input user interface associated with the second one of the items and including a text box, such that an appearance thereof is identical with second one of the input sections corresponding to the second one of the items;
displaying the second input user interface in such a state that the second input user interface is superposed on the second one of the input sections; and
inputting second editorial information of the second one of the items to the text box of the second input user interface.

8. A device for editing contents of a plurality of items, comprising:
a display;
an image processor, operable to draw, on the display, an image including a plurality of input sections each of which is associated with one of the items and includes a text box;
a selector, operable to select one of the items; and
an editorial controller, operable to:
provide an input user interface associated with the selected one of the items and including a text box, such that an appearance thereof is identical with one of the input sections corresponding to the selected one of the items;
display the input user interface in such a state that the input user interface is superposed on the one of the input sections corresponding to the selected one of the items; and
input editorial information of the selected one of the items to the text box of the input user interface.

9. A program product comprising a computer-readable medium having recorded a program operable to cause a computer to execute the method as set forth in claim 1.
